# EUROPÄISCHE PATENTSCHRIFT

(11) **EP 0 725 519 B1**
(45) Veröffentlichungstag und Bekanntmachung des Hinweises auf die Patenterteilung: **01.09.1999**
(21) Anmeldenummer: 96101504.7
(22) Anmeldetag: 02.02.1996
(51) Int. Cl.: H04L 12/43, H04L 29/02, H04B 1/20, B60R 16/02

(54) **Verfahren zur gemeinsamen Übertragung von digitalen Quell- und Steuerdaten zwischen über Datenleitungen verbundenen Datenquellen und -senken**
Method for combined transmission of digital source and control data between data sources and sinks linked by data transmission lines
Procédé pour la transmission combinée de signaux numériques de données de source et de contrôle entre des sources et des récepteurs de données reliés par des lignes de transmission

(30) Priorität: 02.02.1995 DE 19503215
(43) Veröffentlichungstag der Anmeldung: 07.08.1996
(73) Patentinhaber: BECKER GmbH, D-76307 Karlsbad (DE)
(72) Erfinder: Heck, Patrick, D-76448 Durmersheim (DE); Hetzel, Herbert, D-76356 Weingarten (DE)
(74) Vertreter: Patentanwälte Westphal, Mussgnug & Partner

(56) Entgegenhaltungen:
- EP-A- 0 519 111

## Beschreibung

Die Erfindung betrifft ein Verfahren zur gemeinsamen Übertragung von digitalen Quell- und Steuerdaten zwischen über Datenleitungen verbundenen Datenquellen und -senken in einem Netzwerk ringförmiger Architektur, bei dem die Quell- und Steuerdaten in einem Format übertragen werden, welches eine getaktete Folge von einzelnen Bitgruppen gleicher Länge vorschreibt. Dabei werden über die Datenleitung die Quell- und Steuerdaten in einem zu einem Taktsignal synchronen kontinuierlichen Datenstrom übertragen. Das Taktsignal wird von einem einzigen Teilnehmer generiert. Alle anderen Teilnehmer synchronisieren sich auf dieses Taktsignal. Davon zu unterscheiden sind rein asynchrone Datenübertragungungsverfahren, wie paketorientierte Datenübertragungsverfahren z.B. ATM-Verfahren. Weiterhin ist die Erfindung auf die Verwendung eines solchen Verfahrens gerichtet.

Verfahren dieser Art werden überall dort eingesetzt, wo verschiedenartige elektrische und elektronische Geräte, die untereinander Informationen austauschen sollen, in teilweise komplizierter Weise mittels Datenleitungen miteinander vernetzt sind. So kann beispielsweise im Audiobereich die Kommunikation zwischen miteinander vernetzten Datenquellen einerseits, wie zum Beispiel CD-Spielern, Radioempfängern und Kassettenrekordern, und den damit verbundenen Datensenken andererseits, wie beispielsweise Verstärker-Lautsprecher-Kombinationen, durch ein solches Verfahren gesteuert werden.

Mit der Entwicklung der CD-Spieler hat sich als Übertragungsformat das sogenannte "SPDIF-Format (Sony/Philips-Digital-Interface-Format)", das auch unter der Bezeichnung IEC 958 bekannt ist, als Standard durchgesetzt. Dieses Format schreibt eine Übertragung der Daten in einem aus zwei Subframes bzw. Bitgruppen bestehenden Frame vor, wobei jeder Subframe aus einer Präambel von vier Bits für Steuerdaten, daran anschließenden 24 Bits für Quelldaten und abschließend vier Bits für spezielle Steuerdaten besteht. Jeweils ein Subframe eines Frames ist dem linken Audiokanal und der andere Subframe dem rechten Audiokanal zugeordnet. Ein entsprechendes Übertragungsverfahren wird z.B. auch in der EP-A-0 519 111 beschrieben.

Der starre Aufbau dieses Formats ist nachteilig, da Steuerdaten, welche bei der Datenübertragung in komplexen Kommunikationssystemen eine wichtige Rolle spielen, nur in geringem Umfang übertragen werden können.

Aufgabe der Erfindung ist es, ein Verfahren zur gemeinsamen Übertragen von digitalen Quell- und Steuerdaten anzugeben, mit dem eine große Anzahl von verschiedenen Kontrollsignalen übertragbar ist. Dabei soll die Auswertung der Kontrollsignale möglichst einfach und zeitsparend möglich sein.

Gelöst wird diese Aufgabe nach der Erfindung bei einem eingangs genannten Verfahren dadurch, daß in jeder Bitgruppe ein oder mehrere, insbesondere zwei Kontroll-Bits vorhanden sind, die zur Übertragung von Kontrollsignalen verwendet werden, wobei ein Kontrollsignal bitweise den Kontroll-Bits aufeinanderfolgender Bitgruppen zugewiesen wird und jeweils am Anfang eines Kontrollsignals eine Anfangskennung vorgesehen ist, die für alle Kontrollsignale identisch ist.

Durch das bitweise Ablegen der Kontrollsignale in den Kontroll-Bits aufeinanderfolgender Bitgruppen können eine große Anzahl der unterschiedlichsten Kontrollsignale mit großen Längen übertragen werden. Dabei kann jedes der miteinander vernetzten Geräte den Anfang eines Kontrollsignals sehr einfach durch Überprüfung der Kontroll-Bits auf die für alle Kontrollsignale identische Anfangskennung hin erkennen.

Nach der Erfindung werden mehrere aufeinanderfolgende Bitgruppen zu einem Block zusammengefaßt, wobei jeweils einer bestimmten Bitposition innerhalb der ersten Bitgruppe eines Blockes eine Blockbeginn-Kennung zugewiesen wird, wobei stets die Blockbeginnkennung zeitlich vor der Anfangskennung der Kontrollsignale übertragen wird. Bevorzugt umfaßt ein Block dabei 96 Bitgruppen. Durch die erfindungsgemäße Wahl der Länge der Kontrollsignale kleiner als die Anzahl der in einem Block vorhandenen Kontroll-Bits kann auch im Falle einer Verschiebung eines Kontrollsignals beispielsweise durch Verzögerungen bei der Übertragung im Master, gewährleistet werden, daß das gesamte Kontrollsignal innerhalb eines Blockes übertragen wird. Auf diese Weise kann ein Überlappen in den nächten Block verhindert und mit Beginn dieses nächsten Blockes ein neues Kontrollsignal übertragen werden.

Durch die Zusammenfassung mehrerer aufeinanderfolgender Bitgruppen zu einem Block werden mit den Blockanfängen Bezugspunkte innerhalb der Folge von nacheinander übertragenen einzelnen Bitgruppen geschaffen. Da die Kontroll-Bits jeder Bitgruppe jeweils den gleichen, fest vorgegebenen Abstand zu dem Beginn der jeweiligen Bitgruppe aufweisen, steht jedes Kontroll-Bit eines Blockes in einem fest vorgegebenen Abstand zum Blockbeginn. Wird der Beginn einer Übertragung eines Kontrollsignals nur für eine bestimmte Bitgruppe zugelassen, so kann ausgehend von den durch die Blockbeginn-Kennung erkannten Blockanfängen sehr einfach und zeitsparend die Anfangskennung des übertragenen Kontrollsignals gefunden werden.

Nach einer bevorzugten Ausführungsform weist die Anfangskennung der Kontrollsignale eine zeitlich variablen Abstand zur Blockbeginnkennung auf, wodurch ein Verschieben der Kontrol-Bits dem relativ zur Blockbeginn-Kennung also ein im Block Hin- und Hergleiten des Kontrollsignals ermöglicht wird. Dadurch lassen sich Zeitverschiebungen bei der Übertragung insbesondere im Master aufgefangen bevor sie zu Datenverlusten oder zu Datenkonfusionen im Netz führen können.

Nach einer bevorzugten Ausführungsform wird die Anfangskennung jeweils den Kontroll-Bits der ersten Bitgruppe eines Blockes zugewiesen. Auf diese Weise können Kontrollsignale jeweils nur in den Kontroll-Bits der ersten Bitgruppe eines Blockes beginnen und somit sehr leicht erkannt und ausgewertet werden.

Bevorzugt sind dabei alle Kontrollsignale gleich lang. Dadurch ist zum einen eine einfache Auswertung der Kontrollsignale möglich, da von einer festen Länge ausgegangen werden kann. Zum anderen ist die Anzahl der "Reserve-Kontroll-Bits", die im Falle einer Verschiebung des Kontrollsignals innerhalb eines Blocks zur Verfügung stehen, für alle Kontrollsignale gleich, so daß für alle Kontrollsignale die gleiche zulässige maximale Verschiebung angegeben werden kann.

Nach einer weiteren bevorzugten Ausführungsform werden als Datenleitungen Lichtwellenleiter und/oder elektrische Leitungen verwendet. Insbesondere bei der Verwendung von Lichtwellenleitern ist eine Datenübertragung mit sehr hoher Geschwindigkeit möglich. Darüber hinaus führt die Verwendung von Lichtwellenleitern zu einem besonders geringen Gewicht und damit zu einer guten Einsetzbarkeit insbesondere in mobilen Systemen, wie zum Beispiel in einem Kraftfahrzeug.

In einer weiteren bevorzugten Ausführungsform erfolgt die Codierung der einzelnen Bits mittels der Biphase-Codierung. Auf diese Weise kann das Taktsignal, eincodiert in das Datensignal, zusammen mit diesem innerhalb des Netzwerkes übertragen werden.

Bevorzugt wird das von einer als Master eingesetzten Datenquelle/Datensenke erzeugte Taktsignal von den übrigen Datenquellen/Datensenken mittels einer PLL-Schaltung übernommen, so daß alle Datenquellen und -senken synchron zu dem vom Master generierten Takt arbeiten.

Das Verfahren ist nicht auf die Übertragung von Audiodaten beschränkt, sondern kann zur Übertragung beliebiger Daten, wie zum Beispiel Fax-Daten, Status-Daten, Telefonkarten-Daten oder sonstiger Steuerdaten verwendet werden. So können beispielsweise neben den eingangs erwähnten Audiogeräten auch Videokameras, Video-CD-Spieler, Telefone, Faxgeräte, Mikrofone, CD-ROMs oder auch Computer-Festplatten miteinander vernetzt sein. Darüber hinaus können, insbesondere in Kraftfahrzeugen, auch Steuerungs- und Überwachungsgeräte in das Netzwerk einbezogen sein. So ist beispielsweise eine Aufnahme von Überwachungsgeräten für die Funktion von Außenleuchten oder den Reifenluftdruck oder von Geräten für die Messung oder die Steuerung der Motordrehzahl oder des Ladedrucks eines Turboladers möglich. Auf diese Weise kann beispielsweise bei fallendem Reifenluftdruck das Audiosystem einen gespeicherten Text als Warnung über die Lautsprecher abgeben.

Vorteilhaft wird das Verfahren bei einem Kommunikationssystem verwendet, das mehrere über ein ringförmiges Netzwerk miteinander verbundene Netzteilehmer umfaßt, zur Übertragung von Kontrollsignalen eines ersten Netzteilnehmers über das Netzwerk an einen zweiten Netzteilnehmer, wobei ein Netzteilnehmer als Master eingesetzt wird, der die Bitgruppen in bestimmten zeitlichen Abständen absendet, der erste Netzteilnehmer die vom Master abgesandten Bitgruppen empfängt, den Kontroll-Bits ein oder mehrere Kontrollsignale zuweist und die Bitgruppen an den nächsten Teilnehmer im Ring weiterleitet, und der Master aus von ihm empfangenen Bitgruppen den Inhalt der Kontroll-Bits ausliest und den Kontroll-Bits der nächsten abzusendenden Bitgruppe zuweist.

Auf diese Weise können Kontrollsignale von einem ersten Netzteilnehmer zu einem zweiten Netzteilnehmer übertragen werden, auch wenn zwischen den beiden Netzteilnehmern ein als Master eingesetzter Netzteilnehmer angeordnet ist. Die Folge von Kontroll-Bits, welche jeweils ein Kontrollsignal bildet, bleibt auf diese Weise unverändert. Es kann lediglich eine Verschiebung des Kontrollsignals im ganzen aufgrund der Umsetzung der Kontroll-Bits im Master von der aktuellen in die nächste abzusendende Bitgruppe erfolgen.

Bevorzugt erkennt der zweite Netzteilnehmer den Anfang der Kontrollsignale jeweils anhand der Anfangskennung, die einer oder mehreren bestimmten Bitpositionen einer Bitgruppe zugewiesen ist. Auf diese Weise erkennt der zweite Netzteilnehmer den Anfang eines Kontrollsignals auch dann, wenn sich dieser von den Kontroll-Bits der ursprünglichen Bitgruppe zu den Kontroll-Bits einer darauffolgenden Bitgruppe durch das Umsetzen im Master verschoben hat. Erst nachdem die Anfangskennung eines Kontrollsignals erkannt wurde, werden die Kontroll-Bits der nachfolgenden Bitgruppen von der Anfangskennung ausgehend ausgewertet.

Bevorzugt weist der erste Netzteilnehmer die Anfangskennung jeweils den Kontroll-Bits der ersten Bitgruppe eines Blockes zu. Dadurch ist zum einen gewährleistet, daß abhängig von der Anzahl der vorhandenen Netzteilnehmer und der davon abhängigen Verzögerung der Übertragung ein Kontrollsignal nur in einer der ersten Bitgruppen eines Blockes beginnen kann. Dadurch brauchen von den Netzteilnehmern lediglich die ersten Bitgruppen eines Blockes auf die Anfangskennung eines Steuersignals hin überprüft werden, was zu einer Vereinfachung und Zeitersparnis führt. Zum anderen ist gewährleistet, daß bei entsprechender Wahl der Länge eines Steuersignals das gesamte Steuersignal innerhalb eines Blockes zu liegen kommt und nicht das Ende des Steuersignals in den nächsten Block hineinragt.

Bei einer weiteren vorteilhaften Verwendung sind nach der Zuweisung der Anfangskennung durch den ersten Netzteilnehmer die Kontroll-Bits zur Übertragung von Kontrollsignalen für alle übrigen Netzteilnehmer insbesondere bis zum nächsten Blockanfang gesperrt. Auf diese Weise kann jeder Netzteilnehmer anhand der Anfangskennung erkennen, daß innerhalb des aktuellen Blockes bereits ein Steuersignal von einem anderen Netzteilnehmer übertragen wird, so daß eine Übertragung eines eigenen Steuersignals erst innerhalb des nächsten Blockes möglich ist. Wird die Anfangskennung von einem Netzteilnehmer, der ein Steuersignal übertragen will, nicht innerhalb der ersten Bitgruppe eines Blockes entdeckt, so weist dieser Netzteilnehmer den Kontroll-Bits der ersten Bitgruppe des Blockes die Anfangskennung zu, so daß dieser Block für alle übrigen Netzteilnehmer als belegt gilt.

Durch die Verwendung der Anfangskennung gleichzeitig als Belegungskennung wird eine sehr platzsparende und einfach auszuwertende Codierung innerhalb des verwendeten Übertragungsformates erreicht.

Vorteilhaft wird das erfindungsgemäße Verfahren bei einem stationären Kommunikationssystem, insbesondere bei einem Kommunikationssystem im Haushalt verwendet. Dabei kann es sich um ein sogenanntes Multi-Media-Netzwerk-System handeln, das aus den unterschiedlichsten Audio-, Video-, Steuer- und sonstigen Daten erzeugenden und/oder verarbeitenden Netzteilnehmern zusammengesetzt ist.

Darüber hinaus ist das erfindungsgemäße Verfahren sehr vorteilhaft bei einem mobilen Kommunikationssystem, insbesondere bei einem Kommunikationssystem in einem Kraftfahrzeug verwendbar. Gerade die steigende Anzahl der in einem Kraftfahrzeug verwendeten elektronischen Geräte und die notwendige Kommunikation zwischen diesen Geräten kann zu einer vorteilhaften Verwendung des erfindungsgemäßen Verfahrens führen.

Weitere vorteilhafte Ausführungsformen der Erfindung sind in den Unteransprüchen angegeben.

Ein Vorteil der Erfindung liegt darin, daß eine Vielzahl von verschiedenen Kontrollsignalen zwischen verschiedenen Teilnehmern eines Kommunikationssystems übertragen werden können. Dabei können die Kontrollsignale auch bei einer Verschiebung beispielsweise aufgrund von Verzögerungen bei der Übertragung sehr einfach und zeitsparend erkannt und ausgewertet werden.

Die Erfindung wird nachfolgend anhand eines Ausführungsbeispiels unter Bezugnahme auf die Zeichnung erläutert; in dieser zeigt:
- Fig. 1: ein vier Netzteilnehmer umfassendes ringförmiges Netzwerk,
- Fig. 2: die schematisch dargestellte Übertragung eines Kontrollsignals von einem Netzteilnehmer zu einem anderen Netzteilnehmer des in Fig. 1 dargestellten Netzwerkes nach dem erfindungsgemäßen Verfahren,
- Fig. 3: das Kontrollsignal, wie es von Netzteilnehmern nach Fig. 2 abgesandt bzw. empfangen wird,
- Fig. 4: die Übertragung eines Kontrollsignals von einem Netzteilnehmer zu einem anderen Netzteilnehmer des Netzwerks nach Fig. 1 nach dem erfindungsgemäßen Verfahren, wobei die Übertragung des Kontrollsignals über den Master erfolgt und
- Fig. 5: das Kontrollsignal, wie es von den Netzteilnehmern nach Fig. 4 abgesandt bzw. empfangen wird, sowie das Kontrollsignal, wie es ohne Verwendung des erfindungsgemäßen Verfahren empfangen wird.

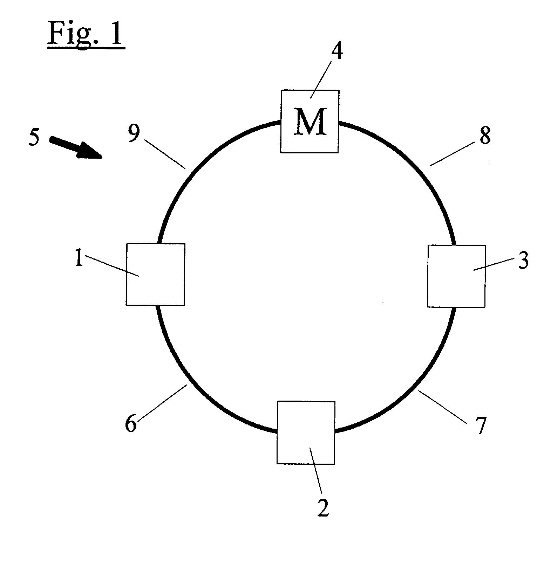

Fig. 1 zeigt ein drei Netzteilnehmer 1, 2, 3 sowie einen als Master eingesetzten Netzteilnehmer 4 umfassendes ringförmiges Netzwerk 5. Die Netzteilnehmer 1, 2, 3, 4 sind über Leitungsabschnitte 6, 7, 8, 9 ringförmig miteinander verbunden.

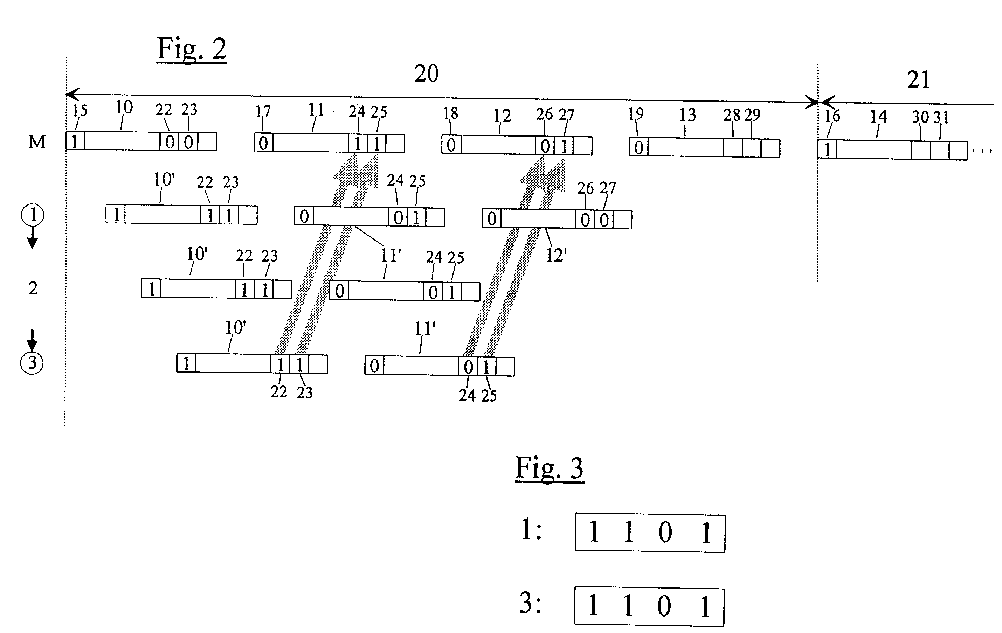

In Fig. 2 ist die Übertragung von Daten zwischen den einzelnen Teilnehmern 1, 2, 3 und dem Master (M) 4 schematisch dargestellt. Der Master 4 sendet in bestimmten Zeitabständen Bitgruppen 10, 11, 12, 13, 14 über den Leitungsabschnitt 9 zum Netzteilnehmer 1 ab.

Das erste Bit 15 der Bitgruppe 10 und das erste Bit 16 der Bitgruppe 14 sind als Blockbeginn-Kennung mit einer 1 belegt, während die ersten Bits 17, 18, 19 der Bitgruppen 11, 12, 13 jeweils mit einer Null belegt sind. Auf diese Weise sind die Bitgruppen 10, 11, 12, 13 zu einem Block 20 zusammengefaßt, während die Bitgruppe 14 die erste Bitgruppe eines sich daran anschließenden Blockes 21 bildet.

Die Bitgruppen 10, 11, 12, 13, 14 umfassen jeweils zwei Kontroll-Bits 22, 23, 24, 25, 26, 27, 28, 29, 30, 31, wobei die Kontroll-Bits 22, 23 vom Master jeweils mit Null vorbelegt werden.

Nachdem die erste Bitgruppe 10 vom Master über den Leitungsabschnitt 9 an den Netzteilnehmer 1 abgesandt wurde, wird sie von diesem empfangen. Da der Netzteilnehmer 1 ein Steuersignal an den Netzteilnehmer 3 übertragen möchte, trägt er die Anfangskennung "11" in die Kontroll-Bits 22, 23 der empfangenen Bitgruppe 10 ein und sendet diese veränderte Bitgruppe 10' über den Leitungsabschnitt 6 an den Netzteilnehmer 2. Da das Belegen der Kontroll-Bits 22, 23 eine zeitliche Verzögerung zwischen Empfangen und Absenden derBitgruppe 10, 10' bewirkt, ist die Bitgruppe 10' seitlich versetzt gegenüber der Bitgruppe 10 dargestellt.

Der Netzteilnehmer 2 empfängt die Bitgruppe 10' und erkennt anhand der in den Kontroll-Bits 22, 23 abgespeicherten Anfangskennung "11", daß mit der Bitgruppe 10' der Anfang eines Kontrollsignals übertragen wird.

Anschließend überträgt der Netzteilnehmer 2 die Bitgruppe 10' unverändert über den Leitungsabschnitt 7 zu dem Netzteilnehmer 3, der der eigentliche Empfänger des Kontrollsignals ist. Dieser erkennt, wie der Netzteilnehmer 2, anhand der in den Kontroll-Bits 22, 23 abgespeicherten Anfangskennung "11", daß ein Kontrollsignal übertragen wird.

Der Netzteilnehmer 3 sendet die Bitgruppe 10' über den Leitungsabschnitt 8 zum Master 4. Dieser liest die Anfangskennung "11" aus den Kontroll-Bits 22, 23 der Bitgruppe 10' aus und überträgt diese in die Kontroll-Bits 24, 25 der nächsten abzusendenden Bitgruppe 11.

Zu dem durch die Taktrate vorgegebenen nächstmöglichen Zeitpunkt schickt der Master 4 die neue Bitgruppe 11 über den Leitungsabschnitt 9 zum Netzteilnehmer 1. Dieser überschreibt die Kontroll-Bits 24, 25 mit der Bitfolge "01", durch welche als Empfänger der Netzteilnehmer 3 sowie die von diesem auszuführende Funktion spezifiziert ist. Anschließend schickt der Netzteilnehmer 1 die veränderte Bitgruppe 11' über den Leitungsabschnitt 6 zum Netzteilnehmer 2. Wie bereits beschrieben entsteht zwischen Empfangen und Absenden der Bitgruppe eine zeitliche Verzögerung, die durch eine seitliche Verschiebung der Bitgruppe 11' bezüglich der Bitgruppe 11 dargestellt ist.

Nachdem der Netzteilnehmer 2 die Bitgruppe 11' empfangen hat, erkennt er an den mit "01" belegten Kontroll-Bits 24, 25, daß er nicht Empfänger dieses Steuersignals ist, und schickt die Bitgruppe 11' unverändert über den Leitungsabschnitt 7 zu dem Netzteilnehmer 3 weiter. Dieser erkennt anhand der mit der Bitfolge "01" belegten Kontroll-Bits 24, 25, daß er als Empfänger des Kontrollsignals gemeint ist, und führt die entsprechende Funktion aus.

Anschließend überträgt der Netzteilnehmer 3 die Bitgruppe 11' unverändert über den Leitungsabschnitt 8 zum Master 4, woraufhin dieser die in den Kontroll-Bits 24, 25 abgespeicherte Bitfolge "01" den Kontroll-Bits 26, 27 der nächsten abzusendenden Bitgruppe 12 zuweist.

Zum vorgegebenen Zeitpunkt schickt der Master 4 die nächste Bitgruppe 12 über den Leitungsabschnitt 9 zu dem Netzteilnehmer 1, der die Kontroll-Bits 26, 27 der Bitgruppe 12 zurücksetzt, das heißt mit "00" belegt. Da im vorliegenden Beispiel von einer festen Länge der Kontrollsignale von vier Bits ausgegangen wird, ist eine spezielle Ende-Kennung der Steuersignale nicht nötig.

Fig. 3 zeigt das vom Netzteilnehmer 1 übertragene Steuersignal "1101", das von dem als Empfänger bestimmten Netzteilnehmer 3 ausgehend von der ersten Bitgruppe 10' des Blockes 20 korrekt als "1101" empfangen wird.

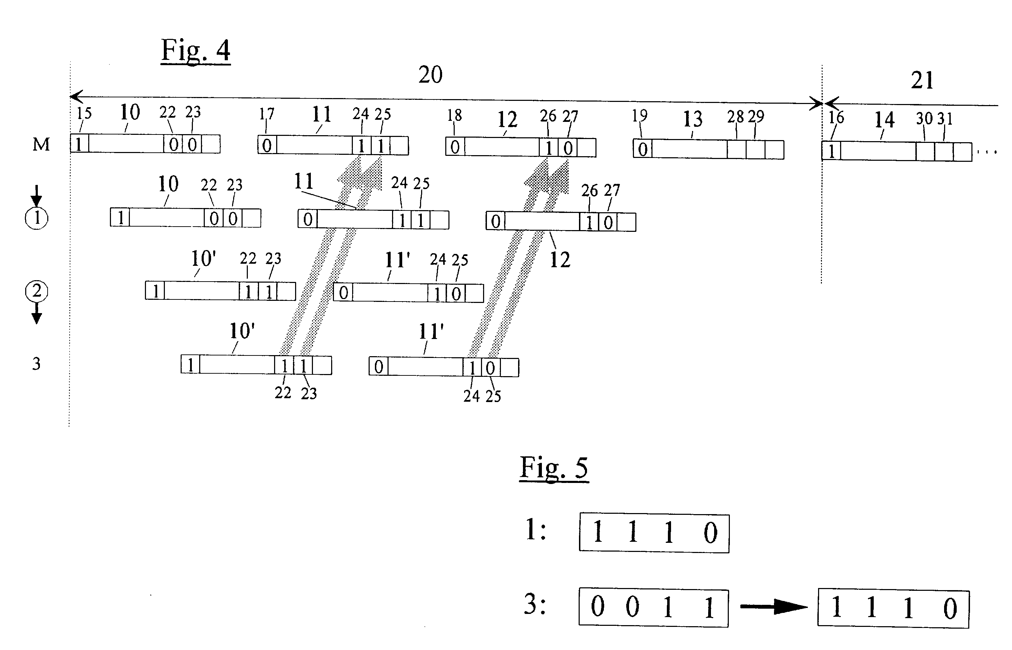

Fig. 4 stellt schematisch die Übertragung des Kontrollsignals "1110" vom Netzteilnehmer 2 zum Netzteilnehmer 1 dar. Dabei tritt infolge der Übertragung über den Master 4 eine Verschiebung des Kontrollsignals um eine Bitgruppe auf:

Zu Beginn des Blockes 20 wird, wie zu Fig. 2 beschrieben, zunächst vom Master 4 eine Bitgruppe 10 über den Leitungsabschnitt 9 zu dem Netzteilnehmer 1 geschickt. Da in vorliegendem Fall der Netzteilnehmer 1 kein Steuersignal übertragen möchte, sendet er lediglich die unveränderte Bitgruppe 10 über den Leitungsabschnitt 6 zum Netzteilnehmer 2.

Dieser erkennt aufgrund der fehlenden Anfangskennung "11" in den Kontroll-Bits 22, 23 der Bitgruppe 10, daß innerhalb des Blockes 20 bisher noch kein Netzteilnehmer ein Steuersignal abgesandt hat und belegt die Kontroll-Bits 22, 23 dementsprechend mit der Anfangskennung "11". Anschließend sendet der Netzteilnehmer 2 die veränderte Bitgruppe 10' über den Leitungsabschnitt 7 an den Netzteilnehmer 3.

Der Netzteilnehmer 3 erkennt anhand der Anfangskennung "11" in den Kontroll-Bits 22, 23 der Bitgruppe 10', daß ein Steuersignal übertragen wird und schickt die Bitgruppe 10' über den Leitungsabschnitt 8 an den Master 4 weiter.

Der Master 4 überträgt die den Kontroll-Bits 22, 23 der Bitgruppe 10' zugewiesene Anfangskennung "11" in die Kontroll-Bits 24, 25 der nächsten abzusendenden Bitgruppe 11. Zum nächstmöglichen Zeitpunkt sendet der Master 4 die Bitgruppe 11 über den Leitungsabschnitt 9 zum Netzteilnehmer 1. Dieser erkennt anhand der seit Blockbeginn erstmals den Kontroll-Bits 24, 25 zugewiesenen Bitfolge "11", die die Anfangskennung eines Kontrollsignals darstellt, den Beginn eines Kontrollsignals und sendet die Bitgruppe 11 unverändert über den Leitungsabschnitt 6 an den Netzteilnehmer 2 weiter.

Der Netzteilnehmer 2 überschreibt die Kontroll-Bits 24, 25 der Bitgruppe 11 mit der Bitfolge "10", welche den Netzteilnehmer 1 als Empfänger kennzeichnet und gleichzeitig den Steuercode für eine von diesem auszuführende Funktion darstellt.

Anschließend übersendet der Netzteilnehmer 2 die so veränderte Bitgruppe 11' über den Leitungsabschnitt 7 an den Netzteilnehmer 3, der anhand der den Kontroll-Bits 24, 25 zugewiesenen Bitfolge "10" erkennt, daß er nicht Empfänger des Kontrollsignals ist. Der Netzteilnehmer 3 sendet somit die Bitfolge 11 über den Leitungsabschnitt 8 an den Master 4 weiter.

Der Master 4 erkennt ebenfalls anhand der Bitfolge "10", daß er nicht als Empfänger für das Steuersignal bestimmt ist und überträgt die den Kontroll-Bits 24, 25 der Bitgruppe 11' zugewiesene Bitfolge "10" an die Kontroll-Bits 26, 27 der nächsten abzusendenden Bitfolge 12. Zum nächstmöglichen Zeitpunkt sendet der Master 4 die Bitgruppe 12 über den Leitungsabschnitt 9 zu dem Netzteilnehmer 1. Dieser erkennt anhand der den Kontroll-Bits 26, 27 der Bitgruppe 12 zugewiesenen Bitfolge "10", daß er der Empfänger des Kontrollsignals ist und führt die entsprechende Funktion aus.

Fig. 5 zeigt die von dem Netzteilnehmer 2 als Kontrollsignal abgesandte Bitfolge "1110" sowie eine Bitfolge "0011", welche sich ergibt, wenn der als Empfänger des Kontrollsignals bestimmte Netzteilnehmer 1 das Kontrollsignal aus den Kontroll-Bits 22, 23 und 24, 25, also immer beginnend mit den Kontroll-Bits der ersten Bitgruppe eines Blockes zusammensetzen würde. Durch die erfindungsgemäße Auswertung der Anfangskennung des Kontrollsignals kann vom Netzteilnehmer 1 das korrekte Kontrollsignal "1110" decodiert werden.

Dabei ist zu beachten, daß die Länge des Kontrollsignals mit vier Bit kürzer gewählt wurde als die Anzahl der im Block 20 zur Verfügung stehenden Kontroll-Bits 22, 23, 24, 25, 26, 27, 28, 29, welche 8 beträgt. Auf diese Weise ist eine Verschiebung des Kontrollsignals innerhalb des Blocks 20 um bis zu vier Bits, d. h. um bis zu zwei Bitgruppen möglich, ohne daß durch das Kontrollsignal die Kontroll-Bits 30, 31 der ersten Bitgruppe 14 des nachfolgenden Blockes 21 überschrieben werden.

Darüber hinaus ist beispielsweise aus der vorangegangenen Beschreibung zu Fig. 4 zu erkennen, daß die den Kontroll-Bits 22, 23 der Bitgruppe 10' zugewiesene Anfangskennung "11" beispielsweise vom Netzteilnehmer 3 auch dazu verwendet werden kann, eine Belegung des Blockes 20 mit einem bereits ausgesandten Kontrollsignal zu erkennen. Falls neben dem Netzteilnehmer 2 auch der Netzteilnehmer 3 in dem zu Fig. 4 beschriebenen Ablauf ein Kontrollsignal übertragen möchte, erkennt er aufgrund der Anfangskennung "11", daß eine Übertragung eines weiteren Kontrollsignals innerhalb des Blockes 20 nicht mehr möglich ist.

## Patentansprüche

1. Verfahren zur gemeinsamen Übertragung von digitalen Quell- und Steuerdaten zwischen über Datenleitungen verbundenen Datenquellen und -senken (1, 2, 3,4), bei dem die Quell- und Steuerdaten in einem Format übertragen werden, welches eine getaktete Folge von einzelnen Bitgruppen (10, 10', 11, 11', 12, 12', 13, 14) gleicher Länge vorschreibt,
wobei in jeder Bitgruppe (10, 10', 11, 11', 12, 12', 13, 14) ein oder mehrere, insbesondere zwei Kontroll-Bits (22, 23, 24, 25, 26, 27, 28, 29, 30, 31) vorhanden sind, die zur Übertragung von Kontrollsignalen verwendet werden, dadurch gekennzeichnet, daß
ein Kontrollsignal bitweise den Kontroll-Bits (22, 23, 24, 25, 26, 27, 28, 29, 30, 31) aufeinanderfolgender Bitgruppen (10, 10', 11, 11', 12, 12', 13, 14) zugewiesen ist
und jeweils am Anfang eines Kontrollsignals eine Anfangskennung vorgesehen ist, die für alle Kontrollsignale identisch ist,
wobei mehrere aufeinanderfolgende Bitgruppen (10, 11, 12, 13) zu einem Block (20) zusammengefaßt werden und jeweils einer bestimmten Bitposition (15) innerhalb der ersten Bitgruppe (10) eines Blockes (20) eine Blockbeginn-Kennung zugewiesen wird,
daß die Länge der Kontrollsignale kleiner ist als die Anzahl der in einem Block (20) vorhandenen Kontroll-Bits (22, 23, 24, 25, 26, 27, 28, 29),
und daß die Anfangskennung und die Blockbeginnkennung zeitlich auseinander fallen können.

2. Verfahren nach Anspruch 1, dadurch gekennzeichnet, daß Blockbeginnkennung zeitlich vor der Anfangskennung übertragen wird.

3. Verfahren nach Anspruch 2, dadurch gekennzeichnet, daß der zeitliche Abstand der Anfangskennung und der Blockbeginnkennung zeitlich veränderlich ist.

4. Verfahren nach Anspruch 1, 2 oder 3, dadurch gekennzeichnet, daß ein Block 96 Bitgruppen umfaßt.

5. Verfahren nach einem der Ansprüche 2 bis 4, dadurch gekennzeichnet, daß die Anfangskennung jeweils den Kontroll-Bits (22, 23) der ersten Bitgruppe (10) eines Blockes (20) zugewiesen wird.

6. Verfahren nach einem der Ansprüche 2 bis 5, dadurch gekennzeichnet, daß alle Kontrollsignale gleich lang sind.

7. Verfahren nach einem der vorhergehenden Ansprüche, dadurch gekennzeichnet, daß als Datenleitungen (6, 7, 8, 9) Lichtwellenleiter und/oder elektrische Leitungen verwendet werden.

8. Verfahren nach einem der vorhergehenden Ansprüche, dadurch gekennzeichnet, daß die Kodierung der einzelnen Bits mittels der Biphase-Kodierung erfolgt.

9. Verwendung des Verfahrens nach einem der vorhergehenden Ansprüche bei einem Kommunikationssystem, das mehrere über ein ringförmiges Netzwerk (5) miteinander verbundene Netzteilnehmer (1, 2, 3,4) umfaßt, zur Übertragung von Kontrollsignalen eines ersten Netzteilnehmers (2) über das Netzwerk (5) an einen zweiten Netzteilnehmer (1), wobei ein Netzteilnehmer als Master (4) eingesetzt wird, der die Bitgruppen (10, 11, 12, 13, 14) in bestimmten zeitlichen Abständen absendet,
der erste Netzteilnehmer (2) die vom Master (4) abgesandten Bitgruppen (10, 11, 12, 13, 14) empfängt, den Kontroll-Bits (22, 23, 24, 25) ein oder mehrere Kontrollsignale mit identischer Anfangskennung zuweist und die Bitgruppen (10', 11') an den nächsten Netzteilnehmer (3) im Ring weiterleitet,
und der Master (4) aus von ihm empfangenen Bitgruppen (10', 11') den Inhalt der Kontroll-Bits (22, 23, 24, 25) ausliest und den Kontroll-Bits (24, 25, 26, 27) der nächsten abzusendenen Bitgruppe (11, 12) innerhalb desselben Blocks (20) zuweist und damit das gesamte Kontrollsignal innerhalb des Blocks (20) zeitlich verschiebt.

10. Verwendung nach Anspruch 9, dadurch gekennzeichnet, daß der zweite Netzteilnehmer (1) den Anfang der Kontrollsignale jeweils anhand der Anfangskennung erkennt, die einer oder mehreren bestimmten Bitpositionen (24, 25) einer Bitgruppe (11) zugewiesenen ist.

11. Verwendung nach Anspruch 9 oder 10, dadurch gekennzeichnet, daß der erste Netzteilnehmer (2) die Anfangskennung jeweils den Kontroll-Bits (22, 23) der ersten Bitgruppe (10) eines Blockes (20) zuweist.

12. Verwendung nach einem der Ansprüche 9, 10 oder 11, dadurch gekenzeichnet, daß nach der Zuweisung der Anfangskennung durch den ersten Netzteilnehmer (2) die Kontroll-Bits (22, 23, 24, 25, 26, 27, 28, 29) zur Übertragung von Kontrollsignalen für alle übrigen Netzteilnehmer (1, 3, 4), insbesondere bis zum nächsten Blockanfang, gesperrt sind.

13. Verwendung nach einem der Ansprüche 9 bis 12, dadurch gekennzeichnet, daß es sich um ein stationäres Kommunikationssystem, insbesondere um ein Kommunikationssystem im Haushalt handelt.

14. Verwendung nach einem der Ansprüche 9 bis 12, dadurch gekennzeichnet, daß es sich um ein mobiles Kommunikationssystem, insbesondere um ein Kommunikationssystem in einem Kraftfahrzeug handelt.

## Claims

1. A method for the joint transmission of digital source data and control data between data sources and data sinks (1, 2, 3, 4) connected via data lines, in which the source and control data are transmitted in a format which prescribes a clocked sequence of individual bit groups (10, 10', 11, 11', 12, 12', 13, 14) of the same length,
wherein one or more, especially two, check bits (22, 23, 24, 25, 26, 27, 28, 29, 30, 31) are present in each bit group (10, 10', 11, 11', 12, 12' 13, 14), and are used to the transmission of check signals,
**characterised in that**
a check signal is allocated by bits to the check bits (22, 23, 24, 25, 26, 27, 28, 29, 30, 31) of successive bit groups (10, 10', 11, 11', 12, 12', 13, 14)
and at the beginning of a check signal an initial identification is provided, which is identical for all check signals,
whereby several successive bit groups (10, 11, 12, 13) are combined to form a block (20) and in each case a start-of-block identification is allocated to a specific bit position (15) inside the first bit group (10) of a block (20),
**in that** the length of the check signals is less than the number of the check bits (22, 23, 24, 25, 26, 27, 28, 29) present in a block (20),
**and in that** the initial identification and the start-of-block identification may be chronologically separate from one another.

2. A method according to Claim 1,
**characterised in that** start-of-block identification is chronologically transmitted before the initial identification.

3. A method according to Claim 2,
**characterised in that** the time interval of the initial identification and the start-of-block identification is variable with time.

4. A method according to Claim 1, 2 or 3,
**characterised in that** a block comprises 96 bit groups.

5. A method according to one of Claims 2 to 4,
**characterised in that** the initial identification is allocated in each case to the check bits (22, 23) of the first bit group (10) of a block (20).

6. A method according to one of Claims 2 to 5,
**characterised in that** all check signals are of equal length.

7. A method according to one of the preceding Claims,
**characterised in that** optical waveguides and/or electric lines are used as data lines (6, 7, 8).

8. A method according to one of the preceding Claims,
**characterised in that** the coding of the individual bits is performed by means of the biphase coding.

9. Use of the method according to one of the preceding Claims in a communication system comprising several network subscribers (1, 2, 3, 4) connected to one another via a ring network (5), for the transmission of check signals of a first network subscriber (2) via the network (5) to a second subscriber (1), whereby one network subscriber is used as the master (4) who sends the bit groups (10, 11, 12, 13, 14) at specific time intervals,
the first network subscriber (2) receives the bit groups (10, 11, 12, 13, 14) sent from the master (4), allocates one or more check signals with identical initial identification to the check bits (22, 23, 24, 25) and forwards the bit groups (10', 11') to the next network participant (3) in the ring,
and the master (4) reads out the contents of the check bits (22, 23, 24, 25) from the bit groups (10', 11') received by the master and allocates them to the check bits (24, 25, 26, 27) of the next bit group (11, 12) to be sent inside the same block (20) and consequently time-shifts the entire check signal inside the block (20).

10. Use according to Claim 9,
**characterised in that** the second network subscriber (1) identifies the start of the check signals in each case by means of the initial identification, which is allocated to one or more specific bit positions (24, 25) of a bit group (11).

11. Use according to Claim 9 or 10,
**characterised in that** the first subscriber (2) allocates the initial identification in each case to the check bits (22, 23) of the first bit group (10) of a block (20).

12. Use according to one of Claims 9, 10 or 11,
**characterised in that** after the allocation of the initial identification by the first network subscriber (2) the check bits (22, 23, 24, 25, 26, 27, 28, 29) for transmitting check signals are inhibited for all remaining subscribers (1, 3, 4), especially until the next start-of-block.

13. Use according to one of Claims 9 to 12,
**characterised in that** it concerns a stationary communication system, especially a domestic communication system.

14. Use according to one of Claims 9 to 12,
**characterised in that** it concerns a mobile communication system, especially a communication system in a motor vehicle.

## Revendications

1. Procédé de transmission simultanée de données numériques de source et de données numériques pilote entre des sources et des puits de données reliés entre eux par des lignes de données, procédé dans lequel les données de source et les données pilote sont transmises dans un format imposant une suite rythmée de différents groupes de bits (10, 10', 11, 11', 12, 12', 13, 14) de même longueur, un ou plusieurs bits de contrôle (22, 23, 24, 25, 26, 27, 28, 29, 30, 31), en particulier deux, utilisés pour la transmission des signaux de contrôle, étant présents dans chaque groupe de bits (10, 10', 11, 11', 12, 12', 13, 14), **caractérisé en ce qu'**un signal de contrôle est assigné bit à bit aux bits de contrôle (22, 23, 24, 25, 26, 27, 28, 29, 30, 31) de groupes de bits successifs (10, 10', 11, 11', 12, 12', 13, 14) et un indicatif de début, identique pour tous les signaux de contrôle, est chaque fois prévu au début d'un signal de contrôle, plusieurs groupes de bits successifs (10, 11, 12, 13) étant groupés en un bloc (20) et un indicatif de début de bloc étant assigné à une certaine position des bits (15) à l'intérieur du premier groupe de bits (10) d'un bloc (20), en ce que la longueur des signaux de contrôle est inférieure au nombre de bits de contrôle (22, 23, 24, 25, 26, 27, 28, 29) présents dans un bloc (20) et en ce que l'indicatif de début et l'indicatif de début de bloc peuvent être décalés dans le temps.

2. Procédé selon la revendication 1, **caractérisé en ce que** l'indicatif de début de bloc est transmis avant l'indicatif de début.

3. Procédé selon la revendication 2, **caractérisé en ce que** la distance temporelle entre l'indicatif de début et l'indicatif de début de bloc peut être modifiée.

4. Procédé selon l'une des revendications 1, 2 ou 3, **caractérisé en ce qu**'un bloc peut contenir 96 groupes de bits.

5. Procédé selon l'une des revendications 2 à 4, **caractérisé en ce que** l'indicatif de début est assigné aux bits de contrôle (22, 23) du premier groupe de bits (10) d'un bloc (20).

6. Procédé selon l'une des revendications 2 à 5, **caractérisé en ce que** tous les signaux de contrôle ont la même longueur.

7. Procédé selon l'une des revendications précédentes, **caractérisé en ce que** des fibres optiques et / ou des lignes électriques sont employées comme lignes de données (6, 7, 8, 9).

8. Procédé selon l'une des revendications précédentes, **caractérisé en ce que** le codage des différents bits est réalisé au moyen du codage biphase.

9. Utilisation du procédé selon l'une des revendications précédentes dans un système de communication comportant plusieurs abonnés (1, 2, 3, 4) reliés entre eux par un réseau en anneau (5), pour la transmission de signaux de contrôle d'un premier abonné (2) au travers du réseau (5) vers un deuxième abonné (1), un abonné utilisé comme maître (4) émettant les groupes de bits (10, 11, 12, 13, 14) à des intervalles de temps particuliers, le premier abonné (2) recevant les groupes de bits (10, 11, 12, 13, 14) émis par le maître (4), assignant un ou plusieurs signaux de contrôle ayant des indicatifs de débuts identiques aux bits de contrôle (22, 23, 24, 25) et transmettant les groupes de bits (10', 11') à l'abonné suivant (3) dans le réseau, et le maître (4) lisant dans les groupes de bits (10', 11') reçu par lui le contenu des bits de contrôle (22, 23, 24, 25) et l'assignant aux bits de contrôle (24, 25, 26, 27) du prochain groupe de bits à transmettre (11, 12) à l'intérieur du même bloc (20) et décalant ainsi dans le temps l'ensemble du signal de contrôle à l'intérieur du bloc (20).

10. Utilisation selon la revendication 9, **caractérisé en ce que** le deuxième abonné (1) reconnaît le début du signal de contrôle à l'aide de l'indicatif de contrôle qui est assigné à une ou plusieurs positions de bits (24, 25) particulières d'un groupe de bits (11).

11. Utilisation selon la revendication 9 ou 10, **caractérisé en ce que** le premier abonné (2) assigne l'indicatif de début aux bits de contrôle (22, 23) du premier groupe de bits (10) d'un bloc (20).

12. Utilisation selon l'une des revendications 9, 10 ou 11, **caractérisé en ce qu**'après l'assignation de l'indicatif de début par le premier abonné (2), les bits de contrôle (22, 23, 24, 25, 26, 27, 28, 29) sont verrouillés pour la transmission de signaux de contrôle pour tous les autres abonnés (1, 3, 4), notamment jusqu'au début du bloc suivant.

13. Utilisation selon l'une des revendications 9 à 12, **caractérisé en ce qu**'il s'agit d'un système de communication stationnaire, notamment d'un système de communication domestique.

14. Utilisation selon l'une des revendications 9 à 12, **caractérisé en ce qu**'il s'agit d'un système de communication mobile, notamment d'un système de communication d'automobile.
